# EUROPÄISCHE PATENTANMELDUNG

(11) **EP 2 644 264 A1**
(43) Veröffentlichungstag der Anmeldung: **02.10.2013**
(21) Anmeldenummer: 12161792.2
(22) Anmeldetag: 28.03.2012
(51) Int. Cl.: B01J 19/24, C01C 3/02

(54) **Druckreguliertes Mehrreaktorsystem**

(71) Anmelder: Aurotec GmbH, 4840 Vöcklabruck (AT)
(72) Erfinder: Zikeli, Stefan, 4844 Regau (AT); Ecker, Friedrich, 4850 Timelkam (AT)
(74) Vertreter: Sonn & Partner Patentanwälte

(57) **Zusammenfassung**

Die Erfindung betrifft eine Vorrichtung und ein Verfahren zur Reaktion eines Ausgangsstoffes in mindestens zwei miteinander verbundenen Reaktoren, umfassend das Reagieren des Ausgangsstoffes in einem ersten Reaktor zu einem ersten Produkt, Abzug des ersten Produktes aus dem ersten Reaktor durch eine Strahlpumpe, wobei eine Unterdruckzone der Strahlpumpe mit dem ersten Reaktor operativ verbunden ist, sodass das erste Produkt des ersten Reaktors durch die Unterdruckzone in einen Treibstrahl eines Treibmediums der Strahlpumpe gelangt, Leiten des Treibmediums mit dem ersten Produkt in einen zweiten Reaktor, worin das erste Produkt zu einem zweiten Produkt reagieren gelassen wird, Trennen des zweiten Produkts vom Treibmedium und Abführen des abgetrennten zweiten Produktes.

## Beschreibung

Die Erfindung betrifft das Gebiet chemischer Prozesstechnik für Substanzen, welche zur Kontamination von Anlagen neigen.

Im Verlauf diverser chemischer Reaktionen kommt es zusätzlich zur Bildung des erwünschten Produktes üblicherweise zur Bildung von Nebenprodukten. Ebenso können Produkte bei unterschiedlichen Bedingungen instabil werden und ebenfalls zur Bildung von Nebenprodukten, z.B. durch Zerfall oder Aggregation, kommen. Manche Nebenprodukte sind in der Lage Reaktionsanlagen durch ihre einfache Anwesenheit, Anhaftung oder durch Reaktionen mit anfälligen Anlagenteilen, z.B. Dichtungen, zu schaden, welche erst durch eine aufwändige Reinigung oder Reparatur entfernt werden können. Derartige Reinigungen können auf lange Zeit die Produktion erheblich unterbrechen. Es wird daher in der Regel vermieden kontaminierende Nebenprodukte über längere Strecken in einer chemischen Anlage zu transportieren und diese möglichst rasch abzutrennen und zu entfernen. In manchen Fällen, z.B. wenn ein instabiles Produkt vorliegt, ist dies nicht ohne Weiteres möglich. In solchen Fällen wird versucht das instabile Produkt unmittelbar in ein stabiles Endprodukt zu überführen. Dies kann zu wesentlichen Einschränkungen in der Gestaltung von Prozessanlagen führen, insbesondere zur Möglichkeit des Einbaus von Pumpen, welche leicht verunreinigt und beschädigt werden können. Diese müssen daher vermieden oder ersetzt werden, was oft mit unzufriedenstellenden Druckregelungen verbunden ist.

Die GB 2 107 311 A betrifft beispielsweise ein Mehrreaktor-Verfahren zur Synthese von Harnstoff aus Wasserstoff und Stickstoff bei Hochdruck von 160 bar in beiden Reaktorteilen. Die Gase werden über eine Pumpe vom ersten in den zweiten Reaktor zur Weiterreaktion transportiert.

Die CA 1102094 betrifft Verfahren zur Desulfierung von Schwefelverbindungen. Eine Variante sieht einen Zweistufen-Prozess vor, in dem die Ausgangsubstanz zunächst in einem Hydrognierungsreaktor in Schwefelwasserstoff überführt wird, welches in einen zweiten Reaktor geleitet wird, in dem Schwefelwasserstoff mit Luftsauerstoff oxidiert wird. Über Pumpen können variable Drücke eingestellt werden. Derartige Pumpen werden durch die Abgase des ersten Reaktors kontaminiert.

Die DE 3540863 C beschreibt eine Mehrreaktoranlage zur Phosgenierung, in der mehrere Reaktortanks durch Leitungen mit Druckregelungseinheiten, wie Pumpen und Ventilen, verbunden werden. Derartige Anordnungen können jedoch zur Kontaminierung der Einbauten mit giftigen oder korrodierenden Stoffen führen, was aufwändige Reinigungen oder Reparaturen nach Verschleiß erfordern kann.

Das Problem schädlicher chemischer Substanzen wurde in der EP 0448750 A1 erkannt. Vorgeschlagen wird darin die chemische oder physikalische Behandlung der Substanzen in einer speziellen Kammer einer trockenverdichteten Vakuumpumpe. Beispielsweise werden korrosive Gase, wie HCl, HF oder Hg-Dämpfe, an aktive Kohle oder Jodkohle gebunden um die Pumpe zu schonen.

Es ist ein Ziel der vorliegenden Erfindung eine Anlage für chemische Prozesse zur Verfügung zu stellen, welche eine genaue und für die Anlage sichere Druckregelung und -kontrolle zwischen mehreren chemischen Reaktionsbereichen erlaubt.

Die Erfindung betrifft eine Vorrichtung und ein Verfahren zur Reaktion eines Ausgangsstoffes in mindestens zwei miteinander verbundenen Reaktoren, umfassend das Reagieren des Ausgangsstoffes in einem ersten Reaktor zu einem ersten Produkt, Abzug des ersten Produktes aus dem ersten Reaktor durch eine Strahlpumpe, wobei eine Unterdruckzone der Strahlpumpe mit dem ersten Reaktor operativ verbunden ist, sodass das erste Produkt des ersten Reaktors durch die Unterdruckzone in einen Treibstrahl eines Treibmediums der Strahlpumpe gelangt, Leiten (über eine Leitung) des Treibmediums mit dem ersten Produkt in einen zweiten Reaktor, worin das erste Produkt zu einem zweiten Produkt reagieren gelassen wird, Trennen des zweiten Produkts vom Treibmedium und Abführen des abgetrennten zweiten Produktes.

Die Erfindung betrifft auch eine Vorrichtung, welche über mindestens zwei miteinander verbundene Reaktoren verfügt, geeignet für den kontinuierlichen Betrieb mit kontaminierenden Substanzen, mit einem ersten Reaktor, welcher über eine Leitung mit einer Strahlpumpe verbunden ist, wobei die Strahlpumpe geeignet ist zur Erzeugung eines Unterdrucks im ersten Reaktor, wobei eine Unterdruckzone der Strahlpumpe über die Leitung mit dem ersten Reaktor operativ verbunden ist, sodass im Betrieb ein erstes Produktfluid des ersten Reaktors durch die Unterdruckzone in einen Treibstrahl eines Treibmediums der Strahlpumpe gelangt, und mit einem zweiten Reaktor, in welchem der Treibstrahl geleitet wird zum Sammeln des Treibmediums mitsamt dem ersten Produktfluid des Treibstahls, und welcher einen Auslass für ein im zweiten Reaktor entstandenes zweites Produktfluid hat, sowie eine Pumpe zur Förderung des Treibmediums aus dem zweiten Reaktor zur Einspeisung in die Strahlpumpe als Treibmedium, wobei das Treibmedium vom zweiten Produktfluid im zweiten Reaktor trennbar ist. Diese Vorrichtung wird vorzugsweise im erfindungsgemäßen Verfahren verwendet. Die folgende nähere Beschreibung bezieht sich sowohl auf das Verfahren, in dem die Vorrichtung zum Einsatz kommen kann, als auch auf die Vorrichtung, welche für die beschriebenen Verfahren und Verfahrensparameter geeignet oder hergerichtet sein kann. Die vorliegende Erfindung wird weiter wie in den Ansprüchen angegeben definiert.

In einer Zwei- (oder Mehr) -Reaktorvorrichtung werden in den Reaktoren Substanzen umgesetzt. So entsteht in dem ersten Reaktor aus einem Ausgangstoff ein erstes Produkt. Das erste Produkt ist üblicherweise ein Fluid, welches durch eine Leitung transportiert werden kann, und wird hierin auch als erstes Produktfluid bezeichnet. Der Ausgangsstoff kann auch eine Mischung an chemischen Substanzen sein, umfassend einen oder mehrere im ersten Reaktor umgesetzten Stoff und optional zusätzlich ein oder mehrere inerte (d.h. hier nicht im ersten Reaktor reagierende) Substanzen. Der Ausgangsstoff kann auch ein Fluid sein. Durch die Verwendung von Fluiden kann die erfindungsgemäße Vorrichtung kontinuierlich betrieben werden, wobei dem ersten Reaktor laufend Ausgangsstoff zugeführt wird und laufend erstes Produkt über die Strahlpumpe abgeführt wird.

Im zweiten Reaktor bzw. bereits vorher durch Kontaktierung mit dem Treibmedium in der Strahlpumpe kann es zu weiteren Reaktionen kommen. Ein zweites Produkt wird letztlich vom zweiten Reaktor abgeführt. Vorzugsweise ist das zweite Produkt im zweiten Reaktor durch eine Phasentrennung vom Treibmedium und ggf. anderen Substanzen abtrennbar, wodurch das abführbare zweite Produkt erhalten wird. Beispielsweise kann das zweite Produkt ein Gas oder ein Feststoff sein. Derartige Phasentrennungen haben den Vorteil der einfachen kontinuierlichen Abtrennbarkeit.

Die erfindungsgemäße Vorrichtung erlaubt eine Verbindung zweier Reaktoren bzw. Reaktorbereiche über eine Strahlpumpe, wodurch unterschiedliche Drücke geregelt werden. Im ersten Reaktor entsteht durch Betrieb der Strahlpumpe ein Unterdruck. Durch diese Anordnung kann auf bewegliche Teile verzichtet werden, welche durch gefährliche oder schädliche chemische Substanzen, welche den ersten Reaktor verlassen können, kontaminiert werden. Dadurch erhöht sich die Sicherheit sowie die Lebensdauer der Vorrichtung und senkt ansonsten hohe Wartungskosten.

Daher ist in einer vorzugsweisen Ausführungsform vorgesehen, die Leitung zwischen dem ersten Reaktor und der Strahlpumpe an der inneren Oberfläche frei von beweglichen Teilen, insbesondere frei von Pumpen, Ventilatoren oder beweglichen Mischern (statische Mischelemente werden können natürlich bei Bedarf eingesetzt werden) zu halten. Außerhalb der Leitung und damit außerhalb des Produktflusses können selbstverständlich beliebige Elemente an der Leitung angebracht werden, wie z.B. Kühlelemente oder Ventilatoren. Um den Austritt vom ersten Produktfluid aus der Vorrichtung zu verhindern, ist vorzugsweise die Leitung zwischen dem ersten Reaktor und der Strahlpumpe eine dichte Leitung.

Auch in diesen bevorzugten Ausführungsformen sind beliebige Einbauten in die Leitung möglich, welche keine beweglichen Teile einbringen. Speziell kann beispielsweise in der Leitung zwischen dem ersten Reaktor und der Strahlpumpe ein Wärmetauscher vorgesehen werden. Ein Wärmetauscher kann zur Abführung der Wärme des ersten Produktfluids eingesetzt werden, um z.B. die Temperatur des ersten Produktfluids für die Strahlpumpe oder den zweiten Reaktor einzustellen. Ebenfalls möglich ist, dass in der Leitung zwischen dem ersten Reaktor und der Strahlpumpe ein Kondensatabscheider liegt. Dadurch kann Kondensat des ersten Produktfluids (insbesondere als Gas) nach dem ersten Reaktor abgetrennt werden. Ein Kondensatabscheider kann vor oder nach oder sowohl vor als auch nach einem Wärmetauscher vorgesehen werden.

In speziellen bevorzugten Ausführungsformen ist der erste Reaktor ein Reaktor, welcher für den Betrieb bei hohen Temperaturen vorgesehen ist. Ein derartiger Reaktor kann beispielsweise ein Thermolyse- oder ein Pyrolysereaktor sein. Ebenfalls möglich sind Verbrennungsreaktoren. Beispielsweise ist der erste Reaktor für Temperaturen von mindestens 300 °C, vorzugsweise mindestens 350 °C oder mindestens 400 °C, mindestens 450 °C oder auch mindestens 500°C, vorgesehen. Reaktionshitze kann im Reaktor entstehen oder von außen zugeführt werden, z.B. über ein Heizelement. Ein geeigneter Reaktor kann durch die Auswahl von geeigneten hitzestabilen Materialien ausgestattet sein. Zusätzlich kann ein Heizelement zur Erhitzung auf die gewünschte Temperatur vorgesehen sein. Hochtemperaturreaktionen sind beispielsweise die Thermolyse von Carbonsäureamiden, wie von Formamid zur Bildung von Cyanwasserstoff (z.B. wie in DE 2325749 A1, WO 2009/062681, WO 2009/062897 oder DE 10 2007 034 715 A1 beschrieben), die Produktion von Acrolein aus Glycerin-Gas (z.B. wie in US 7,951,978 B2 beschrieben), die Oxidierung von organischen Molekülen (z.B. wie in US 2011/306788 B2 beschrieben). Das Heizelement kann beispielsweise eine elektrische Widerstandsheizung oder vorzugsweise eine induktive Heizung (z.B. wie in DE69215358 T2, DE 2712728 A1 oder EP 363066 B1 beschrieben) sein. Der erste Reaktor ist vorzugsweise ein Rohr oder Rohrbündelreaktor. Zur weiteren Vergrößerung der Oberfläche kann der erste Reaktor über diverse Einbauten verfügen, wie beispielsweise Raschig-Ringe, welche vorzugsweise auch beheizbar sind (z.B. induktiv). Die innere Oberfläche des ersten Reaktors, optional auch der Einbauten, kann eine Katalysatorschicht für die jeweils gewünschte Reaktion aufweisen, beispielsweise eine Eisen- oder Eisenoxidschicht für die Thermolyse von Formamid. Vorzugsweise ist der Ausgangsstoff ein Carbonsäureamid. Allgemein kann die Reaktion im ersten Reaktor eine beliebige chemische Reaktion sein, wie beispielsweise eine kovalente Reaktion, Redox-Reaktion, eine Komplexbildungsreaktion, eine Säure-Base-Reaktion oder eine Festkörperreaktion. Bevorzugt ist sie eine Hochtemperaturreaktion bei über 300 °C.

Vorzugsweise ist das erste Produkt ein Thermolyse- oder Pyrolyseprodukt und der erste Reaktor ein Thermolyse- oder Pyrolysereaktor. Das erste Produkt kann ein gewünschtes Endprodukt, chemische Zwischenstufen, ggf. in Kombination mit unerwünschten Nebenprodukten enthalten.

Durch die Strahlpumpe wird im ersten Reaktor ein Unterdruck erzeugt und das erste Produktfluid in die Strahlpumpe angesaugt. "Unterdruck" soll hierin relativ verstanden werden. Der Unterdruck im ersten Reaktor ist relativ zum Druck einer Zuleitung (Eingangsdruck) in den ersten Reaktor. Der Unterdruck kann, muss aber nicht, ein absoluter Unterdruck, i.e. ein Unterdruck relativ zum Atmosphärendruck, sein. Dies ist vom Druck der Zuleitung abhängig. Es ist beispielsweise auch möglich absolute Überdrücke im ersten Reaktor zu halten. Der Druck sowie der Einfluss von Ausgangsstoff werden entweder durch den Zufluss von Ausgangsstoff-haltigem Medium durch die Zuleitung oder alternativ oder in Kombination durch eine separate Zufuhr eines Mediums, vorzugsweise eines inerten Mediums oder Luft, in den Innenraum des ersten Reaktors beeinflusst. Diese Zufuhr wird durch den Eingangsdruck sowie durch entsprechende Druckwiderstände, z.B. Druckventile, vor Eintritt in den Innenraum des ersten Reaktors geregelt.

Im Betrieb ist vorzugsweise der Druck im ersten Reaktor ein absoluter Unterdruck, vorzugsweise ein absoluter Druck von bis zu 500 hPa, insbesondere bevorzugt von bis zu 250 hPa, im Speziellen bevorzugt im Bereich von 80 hPa bis 200 hPa. Das Treibmittel der Strahlpumpe ist vorzugsweise zur Erzeugung dieser Unterdrücke geeignet, d.h. bei Betriebstemperatur ist der Dampfdruck des Treibmediums ausreichend gering. Vorzugsweise ist das Treibmedium geeignet zur Erzeugung eines absoluten Unterdrucks von 500 hPa oder weniger, oder von 400 hPa oder weniger, vorzugsweise von 250 hPa oder weniger, z.B. bei mindestens 50 °C, vorzugsweise bei mindestens 70 °C.

Der letztendlich eingestellte Unterdruck im ersten Reaktor wird durch die Strahlpumpe gesteuert. Eine gewöhnliche Strahlpumpe hat beispielsweise eine Treibdüse, aus der mit hoher Geschwindigkeit ein Treibmedium in eine Mischkammer austritt. Hierbei entsteht nach den Gesetzen von Bernoulli und Venturi ein dynamischer Druckabfall. In der Mischkammer trifft der Treibstrahl auf ein Saugmedium, im Betrieb das erste Produktfluid, welches dadurch beschleunigt wird. Dadurch entsteht im Saugmedium ein Druckabfall, d.h. eine Saugwirkung, in einer Unterdruckzone der Mischkammer, der sich ggf. über die Leitung in Richtung des ersten Reaktors fortpflanzt und von dort das erste Produkt fördert. Durch die Flussgeschwindigkeit wird der Unterdruck beeinflusst. Der Treibmittelstrahl mit dem Saugmedium kann in eine Fangdüse gerichtet werden, von der die Medien aus der Strahlpumpe ausgebracht werden, optional über einen Diffusor. In bevorzugten Ausführungsformen wird über den Treibmittelfluss der Unterdruck im ersten Reaktor geregelt. Gegebenenfalls kann der Druck zusätzlich durch aktive Druckmessung im ersten Reaktor kontrolliert werden, wodurch eine genaue Steuerung ermöglicht wird. Der Druck kann auch ohne Druckmessung anhand von bekannten Flussgeschwindigkeiten und sich daraus ergebenden Drücken gesteuert werden. Vorzugsweise ist das Treibmedium eine Flüssigkeit. Flüssigkeiten weisen höhere Dichten als Gase auf, wodurch sich die Beschleunigung des Saugmediums (erstes Produkt) effizienter gestalten lässt. Vorzugsweise ist die Dichte des Treibmediums mindestens 1 kg/m³, z.B. mindestens 1,1 kg/m³. Bei heißen Prozessgasen ist der Einsatz einer Strahlpumpe zur Erzeugung des Unterdrucks vorteilhaft, da einerseits der Unterdruck leicht eingestellt werden kann und andererseits die Strahlpumpe vom heißen Prozessgas nicht beeinflusst wird. Auch können Strahlpumpen von hoher Korrosionsbeständigkeit eingesetzt werden.

Von der Strahlpumpe gelangt das erste Produkt mitsamt dem Treibmedium - insbesondere vermischt mit dem Treibmedium - in den zweiten Reaktor. Dies kann entweder direkt anschließend, durch Anschluss an die Strahlpumpe bzw. an einen Auslass derselben, oder über eine weitere Leitung geschehen. Der Druck kann im zweiten Reaktor variabel gestaltet werden. Insbesondere ist der Druck des ersten Reaktors bezüglich des zweiten Reaktors ein Unterdruck bzw. der Druck des zweiten Reaktors im Vergleich zum ersten Reaktor ein Überdruck. Vorzugsweise ist im zweiten Reaktor Atmosphärendruck. Atmosphärendruck kann beispielsweise über ein Wasserschloss oder einen Siphon druckneutralisiert werden. Der zweite Reaktor kann als Behälter für das Treibmittel gestaltet werden, welches kontinuierlich zu- und abgeführt werden kann. Durch ein Wasserschloss kann zur Atmosphäre ein Über- oder Unterdruck vermieden werden und andererseits kann das Wasserschloss zugleich eine Überlaufsicherung darstellen. Der zweite Reaktor kann bei Erreichen des Minimalstandes mit weiterem Treibmedium ergänzt werden. Vorzugsweise teilt sich der zweite Reaktor in einen (oberen) Reaktionsbereich, in dem die Reaktion abläuft, z.B. an einer porösen Matrixoberfläche, und einen darunter liegenden Vorratsbereich für das Treibmedium. Selbstverständlich kann auch bereits in der Strahlpumpe die Reaktion ablaufen.

Im zweiten Reaktor entsteht aus dem ersten Produkt das zweite Produkt. Diese Reaktion kann mit Bestandteilen des Treibmediums und/oder mit einem festen oder flüssigen Katalysator geschehen. Vorzugsweise werden hierfür große Oberflächen, z.B. durch oberflächenvergrößernde Einbauten oder Formen des zweiten Reaktors, vorgesehen. Besonders bevorzugt ist eine poröse Matrix, durch welche das Treibmedium sickern kann. Gase können dadurch effizient abgetrennt bzw. chemische Oberflächenreaktionen beschleunigt werden. Die Reaktion im zweiten Reaktor kann eine chemische Reaktion, wie beispielsweise eine kovalente Reaktion, Redox-Reaktion, eine Komplexbildungsreaktion, eine Säure-Base-Reaktion, eine Fällung, eine Festkörperreaktion, und/oder ein physikalischer Prozess, wie eine Phasenseparation, sein, wobei speziell die Kombination aus chemischen und physikalischen Prozessen bevorzugt ist. Das zweite Produkt kann das gewünschte Endprodukt sein und nach Abtrennung vom Treibmedium gewonnen werden. Alternativ können natürlich auch weitere Reaktoren nachgeschaltet werden. Einfache Abtrennungen erfolgen durch Phasenseparation, beispielsweise kann das zweite Produkt ein Gas sein. Ein Gas lässt sich leicht durch Entgasung von einem flüssigen Treibmedium im zweiten Reaktor abtrennen. Vorzugsweise ist die Temperatur im zweiten Reaktor zwischen 0°C und 100°C.

Das Treibmedium kann an die Prozesserfordernisse so angepasst werden, dass über eine bestimmte Einstellung von pH-Werten, Leitfähigkeiten sowie aus der Analyse des austretenden Spaltgases die Prozessparamter, wie Temperatur und Druck, im ersten Reaktor geregelt werden können.

Sollte das Treibmedium chemisch angepasst (pH-Wert Einstellung) oder nach Verbrauch erneuert werden müssen, kann dies über ein Zuführorgan für neues Treibmedium erfolgen.

Vorzugsweise enthält das Treibmittel eine Säure oder Base. Die Reaktion im zweiten Reaktor kann eine Säure-Base-Reaktion umfassen, vorzugsweise enthält das Treibmittel eine Säure. In einem speziellen Beispiel ist die Reaktion im zweiten Reaktor eine Salzbildung eines unerwünschten Nebenprodukts des ersten Produktfluids und eine Gasbildung eines erwünschten zweiten Produktes. Das unerwünschte Nebenprodukt verbleibt somit im zweiten Reaktor und kann kontinuierlich durch Erneuerung des Treibmittels entsorgt werden. In einem konkreten Fall enthält das erste Produkt Ammoniak als unerwünschtes Nebenprodukt und Cyanid als erwünschtes Endprodukt (z.B. bei der Thermolyse von Formamid im ersten Reaktor). Durch eine Säure im zweiten Reaktor (bzw. im Treibmedium) wird gasförmiger Ammoniak zu einem Ammoniumion durch Protonierung durch die Säure umgewandelt. Gelöstes Cyanid wird zu Blausäure umgesetzt und gasförmig ausgetrieben. Hierfür ist es vorteilhaft wenn die Säure im zweiten Reaktor eine stärke Säure ist als das gewünschte zweite Produkt. Beispiele von gewünschten Produktsäuren sind z.B. HF (pKs 3,14), Ameisensäure (pKs 3,75) Essigsäure (pKs 4,75), Schwefelwasserstoff (pKs 6,92), HCN (pKs 9,40). Zur Bildung dieser (leicht trennbaren) Säuren wird insbesondere eine starke oder stärkere Säure, wie H₂SO₄, HCl im Treibmittel vorgesehen. In anderen Fällen kann das zweite Produkt eine Base sein. In diesen Fällen kann es vorteilhaft sein, eine stärkere Base im zweiten Reaktor oder als Treibmittel vorzusehen, welche ein Basesalz in die freie Base als Produkt umwandeln kann. Ein Beispiel ist Ammoniak-Gas (pKb 4,75). Zur Bildung von Ammoniak kann beispielsweise eine starke Base wie NaOH im Treibmittel vorgesehen sein. Eine weitere Reaktion im zweiten Reaktor ist beispielsweise die Bildung von festen Fällprodukten, welche ebenfalls durch Phasentrennung von einem (fluiden) Treibmedium getrennt und anschließend ausgeführt werden können. Vorzugsweise enthält das Treibmedium ein protisches Lösungsmittel, vorzugsweise Wasser. Beispiele für Treibmedien sind wässrige Lösungen, insbesondere von einer Base oder Säure, beispielsweise von Schwefelsäure, Natronlauge oder Calciumhydroxid.

Zur Entgasung und Phasentrennung von gasförmigen zweiten Produkten kann im zweiten Reaktor ein Gasstrom eingeleitet werden, wie beispielsweise eines Inertgases, welches nicht mit den Substanzen des zweiten Reaktors reagiert, wie beispielsweise Stickstoff. Vor der Ableitung des zweiten Produktfluids kann auch ein Filter vorgesehen werden.

Das Treibmittel kann vom zweiten Reaktor direkt über eine Pumpe wieder in die Strahlpumpe geleitet werden. Durch die Pumpensteuerung kann die Flussgeschwindigkeit des Treibmediums und damit der Unterdruck im ersten Reaktor gesteuert werden.

In speziellen Ausführungsformen, insbesondere jene mit einer Säure oder Base im zweiten Reaktor, betrifft die Erfindung auch ein Verfahren umfassend die Absaugung des Säure- oder Basefluids aus einem Unterdruckbehälter einer Vorrichtung, in dem ein Unterdruck durch eine Strahlpumpe erzeugt wird, wobei ein Treibmitttel als Treibstrahl durch eine Treibdüse der Strahlpumpe geleitet wird, wodurch aufgrund des gebildeten Unterdrucks in der Strahlpumpe das Treibmittel mit dem Säure- oder Basefluid (ggf. vermengt wird und) zusammen im Treibstrahl in einen Treibmediumbehälter geleitet wird, die Trennung des Säure- oder Basefluids vom Treibmittel, die Abführung des Treibmittels aus dem Treibmittelbehälter über eine Pumpe in die Strahlpumpe, den Auslass des Säure- oder Basefluids, wobei, sofern das Fluid ein Säurefluid ist, das Treibmittel eine, ggf. starke, Säure umfasst, oder, sofern das Fluid ein Basefluid ist, das Treibmittel eine, ggf. starke, Base umfasst um eine Ionisierung der Säure oder Base des Säure- oder Basefluids zu verhindern. Durch die Säure bzw. Base des Treibmediums wird eine Ionisierung (z.B. durch Deprotonierung der Säure bzw. Protonierung der Base des Fluids) verhindert, womit eine bessere Trennung, insbesondere auch eine Phasentrennung des Fluids und des Treibmittels ermöglicht wird. Vorzugsweise ist das Säure- oder Basefluid ein Gas, welches sich effizient ohne Salzbildung vom Treibmittel entfernen lässt.

Eine weitere Reaktion, welche im ersten, im zweiten oder in beiden Reaktoren ablaufen kann, ist beispielsweise die Suzuki-Reaktion.

Weiters betrifft die Erfindung eine Vorrichtung mit einem Unterdruckbehälter und einer Strahlpumpe geeignet zur Erzeugung eines Unterdrucks im Unterdruckbehälter und zum Abzug eines Säure- oder Basefluids aus dem Unterdruckbehälter, wobei eine Unterdruckzone (Mischkammer) der Strahlpumpe mit dem Unterdruckbehälter operativ verbunden ist, sodass im Betrieb das Fluid des Unterdruckbehälters durch die Unterdruckzone in einen Treibstrahl eines Treibmediums der Strahlpumpe gelangt, und mit einem Treibmediumbehälter, in welchen der Treibstrahl geleitet wird zum Sammeln des Treibmediums mitsamt dem Fluid des Treibstahls, mit einer Pumpe zur Förderung des Treibmediums aus dem Treibmediumbehälter zur Einspeisung in die Strahlpumpe als Treibmedium, wobei das Treibmedium mit dem Säure- oder Basefluid trennbar, insbesondere phasenseparierbar, ist, das Treibmedium eine Säure oder Base aufweist und der Treibmittelbehälter einen Auslass für die Phase des Säure- oder Basefluids hat. Im Speziellen ist das Säure- oder Basefluid ein Produkt einer chemischen Reaktion, welches im Unterdruckbehälter als erstem Reaktor gebildet wird. Ein derartiges Produkt ist beispielsweise HCN, welches z.B. nach dem Andrussow-Verfahren, dem Degussa-BMA-Verfahren oder dem BASF-Verfahren gebildet werden kann. Durch die Erfindung wird die gelöste Säure oder Base als gewünschtes Produkt aus dem Treibmittel ausgetrieben bzw. das Lösen verhindert, wodurch die Säure oder Base rasch abgetrennt und aus dem Treibmittelbehälter unmittelbar wieder entnommen werden kann.

Die vorliegende Erfindung wird durch die nachstehenden Figuren und Beispiele näher erläutert, ohne auf diese Ausführungsformen der Erfindung limitiert zu sein.

### Figuren:

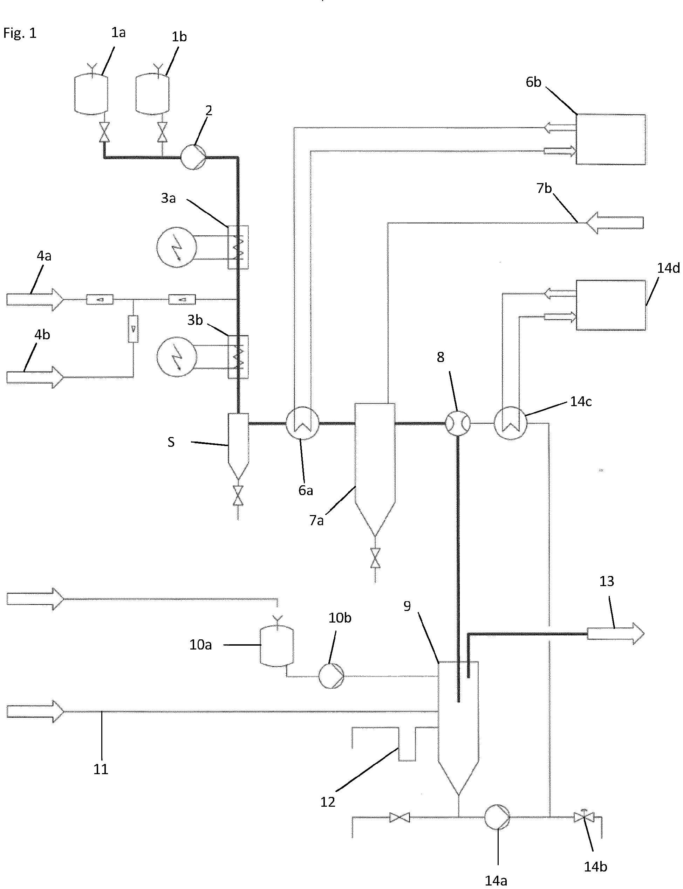

Figur 1 zeigt einen schematischen Aufbau einer erfindungsgemäßen Vorrichtung mit zwei chemischen Reaktoren (3 und 9). Ausgangsstoffe werden durch die Behälter 1a und 1b vorgelegt und durch eine Pumpe 2 gefördert und in den Reaktor 3 geleitet. Der Reaktor 3 verfügt über eine induktiv beheizte Vorwärmzone 3a, in der die Ausgangsstoffe noch unter der Reaktionstemperatur vorerwärmt werden. In der induktiv beheizten Reaktionszone 3b werden die Ausgangsstoffe auf Reaktionstemperatur erhitzt und reagieren unter Produktion des ersten Produkts. Zwischen der Vorwärmzone 3a und der Reaktionszone 3b kann ein weiteres Fluid, z.B. ein Reaktionsgas, wie ein Sauerstoff-haltiges Gas 4a und/oder Inertgas 4b, zugeführt werden. Das erste Produkt wird in einen ersten Kondensatabscheider 5, einen Wärmetauscher 6a, welcher mit Medium 6b temperiert wird, und in einen zweiten Kondensatabscheider 7a geleitet. Im zweiten Kondensatabscheider 7a kann auch ein Gas 7b eingeleitet werden. Das erste Produkt wird in die Strahlpumpe 8 gesaugt und in den zweiten Reaktor 9 eingebracht. Der zweite Reaktor 9 verfügt über einen Zulauf an Treibmedium, welches aus einem Vorlagebehälter 10a über eine Pumpe 10b gefördert wird. Zur Gasseparation kann über eine Gasleitung 11 Spülgas einströmen. Zur Druckneutralisation wird ein Wasserschloss 12 vorgesehen. Produktgas strömt über eine Leitung 13 aus. Das Treibmittel wird über eine Pumpe 14a aus dem zweiten Reaktor 9 gefördert und kann bei Bedarf über das Ventil 14b ausgelassen werden. In einem Wärmetauscher 14c kann optional das Treibmedium auf Reaktionstemperatur vor dem Einbringen in die Strahlpumpe 8 gebracht werden. Der Wärmetauscher 14c wird über ein Medium 14d temperiert.

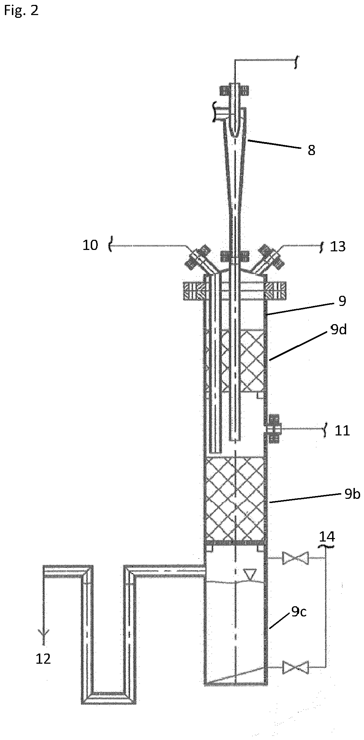

Figur 2 zeigt den zweiten Reaktor 9 mit verbundener Strahlpumpe 8 wie in Fig. 1 dargestellt mit herausgezeichnetem Reaktionsbereich 9b mit einer Oberfläche vergrößernden Matrix und einem Behälterbereich 9c für das Treibmedium. Ein Filterbereich 9d enthält einen Filter, welcher das über die Leitung 13 abgeführte Produktgas weiter reinigen kann.

### Beispiel 1: Thermolyse von Formamid

Die Versuche wurden mit einem Reaktorsystem wie oben beschrieben durchgeführt (Beispielsbeschreibung gemäß Figur 1 und 2)

Als Ausgangstoff wird ein Wasser-Formamid Gemisch in einen Rohrreaktor eingebracht. In der Vorwärmzone werden die vermengten Ausgangsstoffe zunächst auf ∼200 °C erwärmt und in der Redaktionszonen auf Spalttemperatur von Formamid bei ∼490 °C erhitzt. Über die Strahlpumpe wird ein Druck von 200 mbar eingestellt. Damit dieser Unterdruck nicht auf die Ausgangsstoffbehälter durchschlägt, befindet sich vor dem Eingang in den Reaktor ein Druck- oder Durchflussdrossler. Das für den Thermolyseprozess notwendige Prozessvakuum wird mit einer Strahlpumpe 8 erzeugt.

Zwischen Vorwärmzone und Reaktorzonen werden Luft und Stickstoff in den Reaktor eingeführt.

Nachdem Thermolyseprozesse bei sehr hohen Temperaturen ablaufen und die nachgeschalteten Anlagenteile bei niedrigeren Temperaturen betrieben werden können oder müssen, kann das erste Produktgas über einen Wärmetauscher 6a zur Abkühlung und/oder Wärmerückgewinnung zugeführt werden. Auch das Treibmittel der Strahlpumpe kann derart temperiert werden. Eventuell anfallendes Prozesskondensat wird im Kondensatbehälter 7a gesammelt und ausgetragen.

Der Treibmediumstrahl der Strahlpumpe führt in einen zweiten Reaktor 9, welcher das Treibmedium 10, welches auch ein Reaktionsmedium sein kann, beinhaltet und über die Kreislaufpumpe 14 der Strahlpumpe 8 erneut zugeführt wird. Der im Systemkreislauf befindliche Wärmetauscher 14c führt die noch im Prozessgas beinhaltete Wärme sowie die über die Kreislaufpumpe 14a dissipierte Wärme ab. Die Wärmetauscher 14c und 6a können mit entsprechenden Wärmetauscherfluiden oder über Thermostate 6b und 14d der Anlage geregelt zugeführt werden.

In der Regel hat das Prozessgas der Formamidspaltung nach dem Wärmetauscher noch eine Temperatur von ∼100 °C welches durch Kontakt mit dem Treibmedium (ca. 60-80 °C) weiter abgekühlt wird.

Als Treibmedium wird 65% Schwefelsäure in Wasser verwendet, welche einen hohen Siedepunkt hat und zur Erzeugung eines Unterdrucks bei 80°C geeignet ist.

Beim Gaseinlass 7b wird Luft oder Stickstoff eingeblasen, beim Gaseinlass 11 Stickstoff, um reines Produktgas (HCN) auszutreiben und das Treibmedium zu entgasen.

Die folgenden Prozess- und Produktparameter wurden festgestellt:
eingesetztes Formamid: 0,085 kg/h
entwickelte Spaltgasmenge: 0,085 kg/h
   Umsatz 97%
   Formamid: 0,003 kg/h
   Blausäure: 0,046 kg/h
   Wasser: 0,031 kg/h Ammoniak: 0,002 kg/h
   Kohlenmonoxid: 0,004 kg/h
Treibstrahldurchfluss: 1200 1/h
Treibstrahldruck: 6 bar
Treibstrahltemperatur: 80 °C
Saugdruck: 200 mbar

## Patentansprüche

1. Vorrichtung mit mindestens zwei miteinander verbundenen Reaktoren, geeignet für den kontinuierlichen Betrieb mit kontaminierende Substanzen, mit einem ersten Reaktor, welcher über eine Leitung mit einer Strahlpumpe verbunden ist, wobei die Strahlpumpe geeignet ist zur Erzeugung eines Unterdrucks im ersten Reaktor, wobei eine Unterdruckzone der Strahlpumpe über die Leitung mit dem ersten Reaktor operativ verbunden ist, sodass im Betrieb ein erstes Produktfluid des ersten Reaktors durch die Unterdruckzone in einen Treibstrahl eines Treibmediums der Strahlpumpe gelangt, und mit einem zweiten Reaktor, in welchem der Treibstrahl geleitet wird zum Sammeln des Treibmediums mitsamt dem ersten Produktfluid des Treibstahls, und welcher einen Auslass für ein im zweiten Reaktor entstandenes zweites Produktfluid hat, sowie eine Pumpe zur Förderung des Treibmediums aus dem zweiten Reaktor zur Einspeisung in die Strahlpumpe als Treibmedium, wobei das Treibmedium vom zweiten Produktfluid im zweiten Reaktor trennbar ist.

2. Verfahren zur Reaktion eines Ausgangsstoffes in mindestens zwei miteinander verbundenen Reaktoren, umfassend das Reagieren des Ausgangsstoffes in einem ersten Reaktor zu einem ersten Produkt, Abzug des ersten Produktes aus dem ersten Reaktor durch eine Strahlpumpe, wobei eine Unterdruckzone der Strahlpumpe mit dem ersten Reaktor operativ verbunden ist, sodass das erste Produkt des ersten Reaktors durch die Unterdruckzone in einen Treibstrahl eines Treibmediums der Strahlpumpe gelangt, Leiten des Treibmediums mit dem ersten Produkt in einen zweiten Reaktor, worin das erste Produkt zu einem zweiten Produkt reagieren gelassen wird, Trennen des zweiten Produkts vom Treibmedium und Abführen des abgetrennten zweiten Produktes.

3. Vorrichtung oder Verfahren nach Anspruch 1 oder 2, **dadurch gekennzeichnet, dass** die Leitung zwischen dem ersten Reaktor und der Strahlpumpe an der inneren Oberfläche frei von beweglichen Teilen, insbesondere von Pumpen, Ventilatoren oder Mischern, ist.

4. Vorrichtung oder Verfahren nach einem der Ansprüche 1 bis 3, **dadurch gekennzeichnet, dass** die Leitung zwischen dem ersten Reaktor und der Strahlpumpe eine dichte Leitung ist.

5. Vorrichtung oder Verfahren nach einem der Ansprüche 1 bis 4, **dadurch gekennzeichnet, dass** die Leitung zwischen dem ersten Reaktor und der Strahlpumpe eine dichte Leitung ist.

6. Vorrichtung oder Verfahren nach einem der Ansprüche 1 bis 5, **dadurch gekennzeichnet, dass** in der Leitung zwischen dem ersten Reaktor und der Strahlpumpe ein Wärmetauscher liegt.

7. Vorrichtung oder Verfahren nach einem der Ansprüche 1 bis 6, **dadurch gekennzeichnet, dass** in der Leitung zwischen dem ersten Reaktor und der Strahlpumpe ein Kondensatabscheider liegt.

8. Vorrichtung oder Verfahren nach einem der Ansprüche 1 bis 7, **dadurch gekennzeichnet, dass** der erste Reaktor für Temperaturen von mindestens 300 °C vorgesehen ist.

9. Vorrichtung oder Verfahren nach einem der Ansprüche 1 bis 8, **dadurch gekennzeichnet, dass** das Treibmittel zur Erzeugung eines absoluten Unterdrucks von 500 hPa oder weniger, vorzugsweise von 250 hPa oder weniger, bei mindestens 50 °C, vorzugsweise mindestens 70 °C, geeignet ist.

10. Vorrichtung oder Verfahren nach einem der Ansprüche 1 bis 9, **dadurch gekennzeichnet, dass** über den Treibmittelfluss der Unterdruck im ersten Reaktor geregelt ist.

11. Vorrichtung oder Verfahren nach einem der Ansprüche 1 bis 10, **dadurch gekennzeichnet, dass** das Treibmedium eine Flüssigkeit ist.

12. Vorrichtung oder Verfahren nach einem der Ansprüche 1 bis 11, **dadurch gekennzeichnet, dass** das erste Produkt ein Thermolyse- oder Pyrolyseprodukt und der erste Reaktor ein Thermolyse- oder Pyrolysereaktor ist.

13. Vorrichtung oder Verfahren nach einem der Ansprüche 1 bis 12, **dadurch gekennzeichnet, dass** der Druck des ersten Reaktors bezüglich des zweiten Reaktors ein Unterdruck ist.

14. Vorrichtung oder Verfahren nach einem der Ansprüche 1 bis 13, **dadurch gekennzeichnet, dass** das Treibmittel eine Säure oder Base enthält und/oder die Reaktion im zweiten Reaktor eine Säure-Basereaktion umfasst.

15. Vorrichtung oder Verfahren nach einem der Ansprüche 1 bis 14, **dadurch gekennzeichnet, dass** das zweite Produkt ein Gas ist.
